# EUROPÄISCHE PATENTANMELDUNG

(11) **EP 1 933 009 A2**
(43) Veröffentlichungstag der Anmeldung: **18.06.2008**
(21) Anmeldenummer: 07118729.8
(22) Anmeldetag: 18.10.2007
(51) Int. Cl.: F01M 13/00, F16K 17/08, F16K 31/126

(54) **Druckregelventil**

(30) Priorität: 14.12.2006 DE 102006059008
(71) Anmelder: ROBERT BOSCH GMBH, 70442 Stuttgart (DE)
(72) Erfinder: Altvater, Bernd, 71566, Althuette-Waldenweiler (DE)

(57) **Zusammenfassung**

Es ist schon Druckregelventile bekannt mit einem in axialer Richtung bezüglich einer Ventilachse beweglichen Schließelement, das mit einer Ventilöffnung eines Ventilsitzes zusammenwirkt, die in einen äußeren und in einen inneren Kanalabschnitt eines Ausgangskanals führt, wobei das Schließelement einen mit dem inneren Kanalabschnitt zusammenwirkenden inneren Schließabschnitt und einen mit dem äußeren Kanalabschnitt zusammenwirkenden äußeren Schließabschnitt aufweist. Der innere Kanalabschnitt ist mit einem ersten Ausgang und der äußere Kanalabschnitt ist mit einem zweiten Ausgang des Druckregelventils strömungsverbunden. Das Druckregelventil ist in einer Leitung zur Kurbelgehäuseentlüftung vorgesehen und regelt den Druck im Kurbelgehäuse. Nachteilig ist, dass das Regelverhalten des Druckregelventils abhängig vom Volumenstrom der Kurbelgehäuseentlüftung ist. Wird der Kurbelgehäusedruck über dem Saugrohrunterdruck aufgetragen, so ergibt sich bei hohen Volumenströmen eine steilere Regelkennlinie als bei kleinen Volumenströmen.

Bei dem erfindungsgemäßen Druckregelventil wird das Regelverhalten verbessert.

Erfindungsgemäß ist vorgesehen, dass der innere Schließabschnitt (4.2) des Schließelementes (4) in Öffnungsrichtung (8) relativ zu dem äußeren Schließabschnitt (4.1) bewegbar ist.

## Beschreibung

### Stand der Technik

Die Erfindung geht aus von einem Druckregelventil nach der Gattung des Hauptanspruchs.

Es ist schon ein Druckregelventil aus der DE 102 49 720 A1 bekannt, mit einem in axialer Richtung bezüglich einer Ventilachse beweglichen Schließelement, das mit einer Ventilöffnung eines Ventilsitzes zusammenwirkt, die in einen äußeren und in einen inneren Kanalabschnitt eines Ausgangskanals führt, wobei das Schließelement einen mit dem inneren Kanalabschnitt zusammenwirkenden inneren Schließabschnitt und einen mit dem äußeren Kanalabschnitt zusammenwirkenden äußeren Schließabschnitt aufweist Der innere Kanalabschnitt ist mit einem ersten Ausgang und der äußere Kanalabschnitt ist mit einem zweiten Ausgang des Druckregelventils strömungsverbunden. Das Druckregelventil ist in einer Leitung zur Kurbelgehäuseentlüftung vorgesehen und regelt den Druck im Kurbelgehäuse. Nachteilig ist, dass das Regelverhalten des Druckregelventils abhängig vom Volumenstrom der Kurbelgehäuseentlüftung ist. Wird der Kurbelgehäusedruck über dem Saugrohrunterdruck aufgetragen, so ergibt sich bei hohen Volumenströmen eine steilere Regelkennlinie als bei kleinen Volumenströmen. Dies kann dazu führen, dass sich im Kurbelgehäuse bei großen Volumenströmen ein unzulässiger Überdruck einstellt.

### Vorteile der Erfindung

Das erfindungsgemäße Druckregelventil mit den kennzeichnenden Merkmalen des Hauptanspruchs hat demgegenüber den Vorteil, dass das Regelverhalten verbessert wird, indem der innere Schließabschnitt des Schließelementes in Öffnungsrichtung relativ zu dem äußeren Schließabschnitt bewegbar ist. Durch den zusätzlichen Freiheitsgrad ergibt sich eine zweistufige Funktionsweise des Druckregelventils. Die Regelkennlinie hat bei unterschiedlichen Volumenströmen in etwa die gleiche Steigung. Die Druckregelung ist dadurch sanfter, insbesondere bei hohen Unterdrücken im Saugrohr. Durch die gegenüber dem Stand der Technik flacher verlaufende Regelkennlinie ist auch bei hohen Volumenströmen ein Unterdruck im Kurbelgehäuse sichergestellt.

Durch die in den Unteransprüchen aufgeführten Maßnahmen sind vorteilhafte Weiterbildungen und Verbesserungen des im Hauptanspruch angegebenen Druckregelventils möglich.

Gemäß einer vorteilhaften Ausführung ist zwischen dem äußeren Schließabschnitt und dem inneren Schließabschnitt ein flexibler Membranabschnitt vorgesehen ist. Auf diese Weise erhält der innere Schließabschnitt gegenüber dem äußeren Schließabschnitt einen axialen Freiheitsgrad und kann sich unabhängig von diesem axial bewegen. Die Relativbewegung zwischen dem äußeren Schließabschnitt und dem inneren Schließabschnitt ist durch den Membranabschnitt besonders gut geführt. Die Führung des inneren Schließabschnittes mittels eines Membranabschnittes ist sehr bauraumsparend und kostengünstig. Der flexible Membranabschnitt ist beispielsweise U-förmig, S-förmig, wellenförmig oder faltenförmig ausgebildet.

Besonders vorteilhaft ist, wenn der äußere Schließabschnitt hohlzylinderförmig oder ringförmig ausgebildet ist, da der innere Schließabschnitt auf diese Weise radial innerhalb des äußeren Schließabschnitts angeordnet werden kann.

Gemäß einem vorteilhaften Ausführungsbeispiel ist der innere Schließabschnitt zylinderförmig, scheibenförmig oder plattenförmig ausgebildet.

Weiterhin vorteilhaft ist, wenn der äußere Schließabschnitt und der innere Schließabschnitt des Schließelementes in radialer Richtung zueinander beabstandet sind, da auf diese Weise ein radialer Freiheitsgrad erreicht ist, der eine geringe Relativbewegung in radialer Richtung quer zur Öffnungsrichtung zulässt.

Darüber hinaus vorteilhaft ist, dass das Schließelement aus einem Elastomer oder Kunststoff hergestellt ist, da auf diese Weise die Herstellkosten sehr gering sind.

### Zeichnung

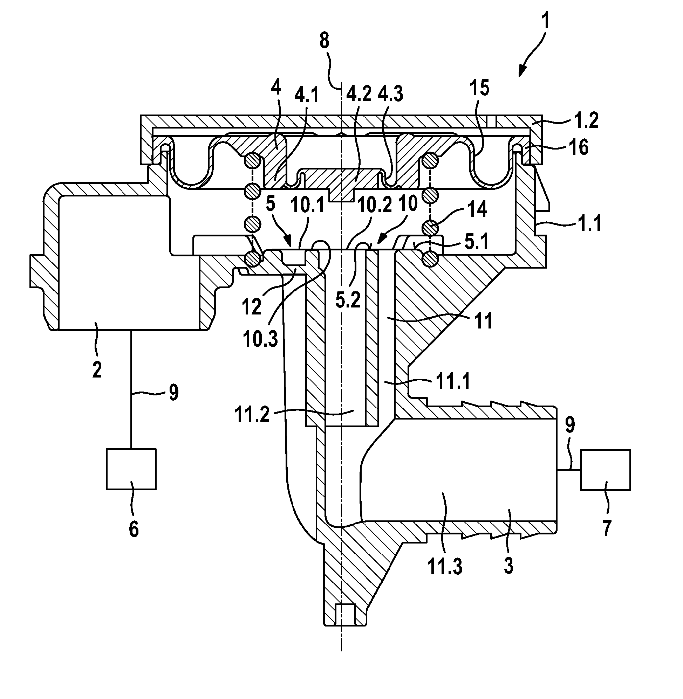

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt im Schnitt ein erfindungsgemäßes Druckregelventil für die Kurbelgehäuseentlüftung.

Das Druckregelventil dient dazu, einen vorbestimmten Druck in einer Einrichtung einzustellen. Beispielsweise ist es in einer Kurbelgehäuseentlüftung eingesetzt und regelt einen vorbestimmten Druck in einem Kurbelgehäuse ein.

Das Druckregelventil hat ein Ventilgehäuse 1 mit einem Eingang 2 und zumindest einem Ausgang 3. Die Strömungsverbindung zwischen dem Eingang 2 und dem zumindest einen Ausgang 3 wird von einem axial bezüglich einer Ventilachse 8 beweglichen Schließelement 4 geregelt, das mit zumindest einem Ventilsitz 5 zusammenwirkt. Der Ventilsitz 5 ist beispielsweise als Flachsitz ausgebildet, könnte aber auch ein Kugel- oder Kegelsitz sein. Eine Rückstellfeder 14 drückt das Schließelement 4 in vom Ventilsitz 5 abgewandter Richtung. Die vom Ventilsitz 5 abgewandte Rückseite des Schließelementes 4 ist vom Druck der Atmosphäre beaufschlagt. Wenn das Schließelement 4 an dem Ventilsitz 5 anliegt, ist die Strömungsverbindung zu dem zumindest einen Ausgang 3 unterbrochen. Wenn es von dem Ventilsitz 5 in Öffnungsrichtung beabstandet ist, ist die Strömungsverbindung geöffnet. Je weiter das Schließelement 4 von dem Ventilsitz 5 beabstandet ist, desto größer ist der freigegebene Strömungsquerschnitt und der Volumenstrom durch das Druckregelventil hindurch und desto geringer ist der Druckverlust, den das Druckregelventil erzeugt.

Der Eingang 2 des Druckregelventils ist mit einem Kurbelgehäuse 6 und der Ausgang 3 mit einem Saugrohr 7 einer Brennkraftmaschine strömungsverbunden. In dem Kurbelgehäuse 6 entsteht durch aus den Zylindern der Brennkraftmaschine in das Kurbelgehäuse 6 eintretendes sogenanntes Blowby-Gas ein Überdruck, der über eine mit dem Saugrohr 7 strömungsverbundene Entlüftungsleitung 9, in der das erfindungsgemäße Druckregelventil angeordnet ist, auf einen vorbestimmten Wert eingeregelt wird. In dem Saugrohr 7 herrscht in den meisten Betriebszuständen ein variabler Unterdruck.

Je größer der freigegebene Strömungsquerschnitt des Druckregelventils ist, desto stärker verringert sich der Druck im Kurbelgehäuse 6 in Richtung des Drucks im Saugrohr 7. Der Druck im Kurbelgehäuse 6 darf jedoch einen vorbestimmten Wert von minimal etwa -40 bis -70 mbar nicht unterschreiten, damit die Dichtungen der Brennkraftmaschine nicht überlastet werden.

Der Ventilsitz 5 weist eine Ventilöffnung 10 auf, die den Eingang in einen zum Ausgang 3 führenden Ausgangskanal 11 bildet und von dem Schließelement 4 verschließbar ist. Die Ventilöffnung 10 ist bei geschlossenem Druckregelventil vollständig überdeckt. Sie weist einen äußeren Öffnungsabschnitt 10.1 und einen inneren Öffnungsabschnitt 10.2 auf. Der innere Öffnungsabschnitt 10.2 ist gegenüber dem äußeren Öffnungsabschnitt 10.1 durch eine ringförmige Wandung 10.3 abgegrenzt. Beispielsweise ist der äußere Öffnungsabschnitt 10.1 ringförmig und der innere Öffnungsabschnitt 10.2 kreisförmig ausgebildet. Beide Öffnungsabschnitte 10.1,10.2 sind beispielsweise konzentrisch zueinander angeordnet.

Der äußere Öffnungsabschnitt 10.1 der Ventilöffnung 10 führt in einen äußeren Kanalabschnitt 11.1 und der innere Öffnungsabschnitt 10.2 in einen durch die ringförmige Wandung 10.3 gebildeten inneren Kanalabschnitt 11.2. Die beiden Kanalabschnitte 11.1,11.2 münden stromab beispielsweise in einen gemeinsamen, zum Ausgang 3 führenden Kanalabschnitt 11.3. Der äußere Kanalabschnitt 11.1 hat an seinem der Ventilöffnung 10 zugewandten Eingang einen ringförmigen Querschnitt. Dieser verändert sich stromab durch Bildung einen Absatzes 12 beispielsweise in einen halbreisförmigen oder C-förmigen Querschnitt. An dem Absatz 12 ist der innere Kanalabschnitt 11.2 gehalten.

Das Schließelement 4 weist einen äußeren Schließabschnitt 4.1 und einen inneren Schließabschnitt 4.2 auf, wobei der äußere Schließabschnitt 4.1 mit dem äußeren Öffnungsabschnitt 10.1 der Ventilöffnung 10 und der innere Schließabschnitt 4.2 mit dem inneren Öffnungsabschnitt 10.2 öffnend bzw. schließend zusammenwirkt. Der innere Öffnungsabschnitt 10.2 ist in geschlossenem Zustand von dem inneren Schließabschnitt 4.2 des Schließelementes 4 überdeckt.

Das Schließelement 4 ist mittels einer Membran 15 axial beweglich gelagert, die mit einem Randabschnitt 16 zwischen zwei Gehäuseabschnitten 1.1,1.2 des Ventilgehäuses 1 fixiert ist. Die Membran 15 ist U-förmig, S-förmig, wellenförmig oder faltenförmig ausgebildet. Die Membran 15 könnte auch die Funktion der Rückstellfeder 14 übernehmen, so dass die separate Rückstellfeder 14 entfallen könnte.

Erfindungsgemäß ist vorgesehen, dass der innere Schließabschnitt 4.2 des Schließelementes 4 in Öffnungsrichtung 8 relativ zu dem äußeren Schließabschnitt 4.1 bewegbar ist. Auf diese Weise wird eine zweistufige Funktionsweise des Druckregelventils erreicht.

Wegen der zweistufigen Wirkungsweise des Druckregelventils ist ein die Ventilöffnung 10 ringförmig umgebender äußerer Ventilsitz 5.1 und ein innerer Ventilsitz 5.2 vorgesehen, die zusammen den Ventilsitz 5 bilden. Der äußere Schließabschnitt 4.1 des Schließelementes 4 wirkt mit dem äußeren Ventilsitz 5.1 zusammen und der innere Schließabschnitt 4.2 des Schließelementes 4 mit dem inneren Ventilsitz 5.2. Der innere Ventilsitz 5.2 ist durch die ringförmige Wandung 10.3 bzw. durch die dem Ventilsitz 5 zugewandte Stirnseite des inneren Kanalabschnittes 11.2 gebildet. Wenn der äußere Schließabschnitt 4.1 des Schließelementes 4 am äußeren Ventilsitz 5.1 anliegt, ist die Ventilöffnung 10 mit beiden Öffnungsabschnitten 10.1,10.2 verschlossen.

Bei zunehmendem Unterdruck im Ansaugrohr 7 schließt zunächst der innere Öffnungsabschnitt 10.2, während der äußere Öffnungsabschnitt 10.1 der Ventilöffnung 10 noch offen bleibt. Bei weiter steigendem Unterdruck im Ansaugrohr 7 wird der äußere Schließabschnitt 4.1 immer näher an den äußeren Ventilsitz 5.1 gezogen, bis der äußere Öffnungsabschnitt 10.1 auch geschlossen ist. Durch diese zweistufige Funktionsweise wird die Fläche, über die der Unterdruck des Saugrohrs 7 auf das Schließelement 4 wirkt, verringert, so dass das Schließelement 4 bei hohem Unterdruck auch noch weich schließen kann und nicht schlagartig an den Ventilsitz 5 gezogen wird. Daher wird durch die erfindungsgemäße Ausführung das Regelverhalten des Druckregelventils verbessert, insbesondere bei hohen Unterdrücken im Saugrohr 7.

Die zweistufige Ausbildung wird gemäß einem Ausführungsbeispiel erreicht, indem zwischen dem äußeren Schließabschnitt 4.1 und dem inneren Schließabschnitt 4.2 ein flexibler Membranabschnitt 4.3 ausgebildet ist. Dazu sind der äußere Schließabschnitt 4.1 und der innere Schließabschnitt 4.2 in radialer Richtung zueinander beabstandet. Beide Schließabschnitte 4.1, 4.2 sind beispielsweise konzentrisch zueinander angeordnet.Der flexible Membranabschnitt 4.3 ist U-förmig, S-förmig, wellenförmig oder faltenförmig ausgebildet und aus einem Elastomer oder Kunststoff hergestellt.

Der äußere Schließabschnitt 4.1 ist beispielsweise hohlzylinderförmig oder ringförmig und der innere Schließabschnitt 4.2 beispielsweise zylinderförmig, scheibenförmig oder plattenförmig ausgebildet. Der innere Schließabschnitt 4.2 ist radial innerhalb des äußeren Schließabschnitts 4.1 angeordnet. Die Höhe des inneren Schließabschnitts 4.2 ist geringer als die Höhe des äußeren Schließabschnittes 4.1.Der äußere Schließabschnitt 4.1 weist eine Schulter 18 auf, an der die Membran 15 angeformt ist und auf die die Rückstellfeder 14 rückstellend wirkt.

Anstatt des Membranabschnittes 4.3 könnte der innere Schließabschnitt 4.2 alternativ auch als Kolben innerhalb des äußeren Schließabschnittes 4.1 gelagert sein und mit einem Rückstellelement zusammenwirken.

Der innere Schließabschnitt 4.2, der flexible Membranabschnitt 4.3, der äußere Schließabschnitt 4.1 und die Membran 15 mit ihrem Randabschnitt 16 sind gemäß dem Ausführungsbeispiel einstückig ausgeführt, beispielsweise als ein einziges Stück spritzgegossen. Das Schließelement 4 ist beispielsweise aus einem Elastomer oder Kunststoff hergestellt.

## Patentansprüche

1. Druckregelventil für eine Kurbelgehäuseentlüftung, mit einem in axialer Richtung bezüglich einer Ventilachse beweglichen Schließelement, das mit einer Ventilöffnung eines Ventilsitzes zusammenwirkt, die in einen äußeren und in einen inneren Kanalabschnitt eines Ausgangskanals führt, wobei das Schließelement einen mit dem inneren Kanalabschnitt zusammenwirkenden inneren Schließabschnitt und einen mit dem äußeren Kanalabschnitt zusammenwirkenden äußeren Schließabschnitt aufweist, **dadurch gekennzeichnet, dass** der innere Schließabschnitt (4.2) des Schließelementes (4) in Öffnungsrichtung (8) relativ zu dem äußeren Schließabschnitt (4.1) bewegbar ist.

2. Druckregelventil nach Anspruch 1, **dadurch gekennzeichnet, dass** zwischen dem äußeren Schließabschnitt (4.1) und dem inneren Schließabschnitt (4.2) ein flexibler Membranabschnitt (4.3) vorgesehen ist.

3. Druckregelventil nach Anspruch 1, **dadurch gekennzeichnet, dass** der flexible Membranabschnitt (4.3) U-förmig, S-förmig, wellenförmig oder faltenförmig ausgebildet ist.

4. Druckregelventil nach Anspruch 1, **dadurch gekennzeichnet, dass** der äußere Schließabschnitt (4.1) hohlzylinderförmig oder ringförmig ausgebildet ist.

5. Druckregelventil nach Anspruch 1, **dadurch gekennzeichnet, dass** der innere Schließabschnitt (4.2) zylinderförmig, scheibenförmig oder plattenförmig ausgebildet ist.

6. Druckregelventil nach Anspruch 1, **dadurch gekennzeichnet, dass** der äußere Schließabschnitt (4.1) und der innere Schließabschnitt (4.2) des Schließelementes (4) in radialer Richtung zueinander beabstandet sind.

7. Druckregelventil nach Anspruch 1, **dadurch gekennzeichnet, dass** das Schließelement (4) einstückig ausgeführt ist.

8. Druckregelventil nach Anspruch 1, **dadurch gekennzeichnet, dass** das Schließelement (4) aus einem Elastomer oder Kunststoff hergestellt ist.

9. Druckregelventil nach Anspruch 1, **dadurch gekennzeichnet, dass** der äußere Kanalabschnitt (11.1) und der innere Kanalabschnitt (11.2) in einen gemeinsamen Kanalabschnitt (11.3) münden.

10. Druckregelventil nach Anspruch 1, **dadurch gekennzeichnet, dass** das Schließelement (4) mittels einer Membran (15) axial beweglich gelagert ist.
